# EUROPEAN PATENT APPLICATION

(11) **EP 4 746 104 A1**
(43) Date of publication of application: **20.05.2026**
(21) Application number: 24838563.5
(22) Date of filing: 21.06.2024
(51) Int. Cl.: H01M 10/0587

(54) **ELECTRODE ASSEMBLY, BATTERY CELL AND ELECTRICAL DEVICE**

(30) Priority: 10.07.2023 CN 202310835195
(71) Applicant: Ningde Amperex Technology Limited, Ningde, Fujian 352100 (CN)
(72) Inventor: ZHANG, Guowen, Ningde, Fujian 352100 (CN)
(74) Representative: Dehns Germany Partnerschaft mbB
(86) International application number: PCT/CN2024/100768
(87) International publication number: WO 2025/011306

(57) **Abstract**

Embodiments of the present application provide an electrode assembly, a battery cell, and an electrical device. The electrode assembly is of a wound structure and includes a first electrode plate, a second electrode plate, and a separator, the separator being disposed between the first electrode plate and the second electrode plate. The first electrode plate includes a first winding start end and the separator includes a second winding start end, where, along a winding direction of the electrode assembly, a distance between the first winding start end and the second winding start end is not greater than 5 mm. The electrode assembly further includes an insulator, the insulator being disposed between an innermost turn of the second electrode plate and the first winding start end to separate the first winding start end from the second electrode plate.

## Description

### CROSS-REFERENCE TO RELATED APPLICATIONS

This application claims priority to Chinese Patent Application No. CN202310835195.0, filed on July 10, 2023, and entitled "ELECTRODE ASSEMBLY, BATTERY CELL, AND ELECTRICAL DEVICE", the entire contents of which are incorporated herein by reference.

### TECHNICAL FIELD

The present application relates to the technical field of batteries, and in particular, to an electrode assembly, a battery cell, and an electrical device.

### BACKGROUND

Battery cells are widely used in portable electronic devices, electric vehicles, electric tools, drones, energy storage devices and other fields. During the manufacturing process of a battery cell, the reliability of the battery cell is an issue that cannot be ignored. Therefore, how to improve the reliability of the battery cell is a technical problem that urgently needs to be solved in battery cell technology.

### SUMMARY

The present application provides an electrode assembly, a battery cell, and an electrical device, where the electrode assembly can effectively improve the reliability of the battery cell.

The present application is realized through the following technical solutions:

In a first aspect, an embodiment of the present application provides an electrode assembly, where the electrode assembly is of a wound structure and includes a first electrode plate, a second electrode plate, and a separator, the separator being disposed between the first electrode plate and the second electrode plate, the first electrode plate including a first winding start end, and the separator including a second winding start end, where, along a winding direction of the electrode assembly, a distance between the first winding start end and the second winding start end is not greater than 5 mm; where the electrode assembly further includes an insulator, the insulator being disposed between an innermost turn of the second electrode plate and the first winding start end to separate the first winding start end from the second electrode plate.

With the electrode assembly according to embodiments of the present application, even if the separator shrinks after the battery cell is dropped or subjected to a drop test, such that the first winding start end and the second winding start end, which were originally aligned with each other, are no longer aligned or the distance therebetween increases, thereby causing the first winding start end to be exposed from between two layers of separator, short-circuiting caused by contact between the first winding start end and the second electrode plate can still be avoided due to the presence of the insulator disposed between the first winding start end and the innermost turn of the second electrode plate.

According to some embodiments of the present application, the innermost turn of the second electrode plate includes a first corner segment, the first corner segment being disposed opposite to the first winding start end, and at least a portion of the insulator is disposed between the first corner segment and the first winding start end. Since at least a portion of the insulator is disposed between the first corner segment and the first winding start end, even if the separator shrinks and the first winding start end protrudes beyond the second winding start end, the first winding start end is blocked by the insulator, thereby avoiding the technical problem of short-circuiting between the positive and negative electrode plates caused by contact between the first winding start end and the first corner segment.

According to some embodiments of the present application, the separator includes a first separator and a second separator located on two sides of the first electrode plate; the insulator extends around the first winding start end, and two ends of the insulator are connected to the first separator and the second separator, respectively. Since the insulator extends around the first winding start end and is connected to the first separator and the second separator, respectively, shrinkage of the separator can be restricted, thereby effectively alleviating the problem of the first winding start end protruding from the second winding start end.

According to some embodiments of the present application, the innermost turn of the second electrode plate includes a first straight segment and a second straight segment, the first corner segment connects the first straight segment and the second straight segment, the first straight segment, the first corner segment, and the second straight segment surround at least a portion of the first winding start end, and the insulator includes a first section, a second section, and a third section sequentially arranged along the winding direction of the second electrode plate, the first section being disposed between the first straight segment and the first separator, the second section being disposed between the first corner segment and the first winding start end, and the third section being disposed between the second straight segment and the second separator. Accordingly, the insulator can cover the first winding start end from multiple angles and in multiple directions, being disposed not only between the innermost turn of the second electrode plate and the first winding start end in a thickness direction of the electrode assembly, but also between the innermost turn of the second electrode plate and the first winding start end in a length direction of the electrode assembly. Thus, the innermost turn of the second electrode plate is isolated from the first winding start end to the greatest extent, alleviating short-circuiting caused by contact between the innermost turn of the second electrode plate and the first winding start end.

According to some embodiments of the present application, the insulator includes a first insulator, the first insulator being connected to the first separator and the second separator.

According to some embodiments of the present application, the first insulator includes a first substrate layer and a first adhesive layer, the first substrate layer being connected to the first separator and the second separator through the first adhesive layer. The first substrate layer can ensure the insulation performance of the insulator and provide certain strength, while the second adhesive layer can ensure that the insulator is adhesively attached to the first separator and the second separator. Certainly, the first adhesive layer and the second adhesive layer may also have insulation performance, which is not limited in the embodiments of the present application.

According to some embodiments of the present application, the first substrate layer has a thickness of 5 mm to 50 mm. This not only ensures that the first substrate layer can prevent short-circuiting between the positive electrode plates and negative electrode plates, but also alleviates the problem of fracture of the first corner segment that would otherwise occur due to disposing an excessively thick first substrate layer between the first corner segment and the first winding start end.

According to some embodiments of the present application, an overlapping length of the first adhesive layer with the first separator or the second separator in the winding direction is 0.5 mm to 15 mm. This not only ensures sufficient adhesive force between the first adhesive layer and the first separator, but also avoids material waste caused by an excessively large overlapping length of the first adhesive layer with the first separator in the winding direction.

According to some embodiments of the present application, the first adhesive layer has an adhesive strength of not less than 0.05 N/mm. The first adhesive layer needs sufficient adhesive strength to ensure that, after the electrode assembly is immersed in an electrolyte, the first adhesive layer can still be adhesively fixed to the first separator and the second separator.

According to some embodiments of the present application, the first adhesive layer has a thickness of 2 µm to 20 µm. This not only ensures that the first adhesive layer can be firmly bonded to the first separator and the second separator, but also alleviates material waste caused by an excessively thick first adhesive layer.

According to some embodiments of the present application, the first substrate layer is configured as a PP material layer, a PI material layer, or a PET material layer. The flexibility of a PET material layer is inferior to that of a PP material layer or a PI material layer, while a PP material layer and a PI material layer have better flexibility and the substrate has lower rebound force after bending.

According to some embodiments of the present application, the insulator further includes a second insulator, the second insulator being connected to an inner surface of the innermost turn of the second electrode plate. On the one hand, the second insulator can reduce the probability of short-circuiting between the positive and negative electrodes caused by contact between the first winding start end and the innermost turn of the second electrode plate; on the other hand, the first insulator can also effectively prevent positive ions on a side surface of the second electrode plate facing the first winding start end from escaping, thereby reducing the problem of metal precipitation on the first winding start end.

According to some embodiments of the present application, the second insulator includes a second adhesive layer, the second adhesive layer being connected to the inner surface of the innermost turn of the second electrode plate. The second adhesive layer can be configured as an insulating component, thereby reducing the probability of short-circuiting between the positive and negative electrode plates caused by contact between the first winding start end and the innermost turn of the second electrode plate, while also effectively preventing positive ions on a side surface of the second electrode plate facing the first winding start end from escaping, thereby reducing the problem of metal precipitation on the first winding start end.

According to some embodiments of the present application, the second adhesive layer has a thickness of 2 µm to 20 µm. This not only ensures that the second adhesive layer can prevent positive ions in the first corner segment from escaping, but also alleviates the problem of fracture of the first corner segment that would otherwise occur due to disposing the second adhesive layer on an inner side surface of the first corner segment.

According to some embodiments of the present application, an adhesive strength of the second adhesive layer in an electrolyte is 0.02 N/mm to 0.4 N/mm. The second adhesive layer needs sufficient adhesive strength to ensure that, after the electrode assembly is immersed in an electrolyte, the second adhesive layer can still be adhesively fixed to the inner surface of the innermost turn of the second electrode plate.

According to some embodiments of the present application, after the electrode assembly is immersed in an electrolyte, the second adhesive layer is separated from the first substrate layer or the second adhesive layer is dissolved in the electrolyte. Accordingly, only the second adhesive layer or no component at all is adhesively attached to the inner surface of the innermost turn of the second electrode plate, thereby alleviating the problem of fracture of the innermost turn of the second electrode plate caused by excessive elastic force.

According to some embodiments of the present application, after the electrode assembly is immersed in an electrolyte, the second adhesive layer is separated from the first substrate layer, the first substrate layer including a first side surface connected to the second adhesive layer and a second side surface connected to the first adhesive layer, and a roughness of the first side surface being less than a roughness of the second side surface. Since the roughness of the first side surface is less than the roughness of the second side surface, the adhesive force between the second adhesive layer and the first side surface is less than the adhesive force between the second side surface and the first adhesive layer, so that after the electrode assembly is immersed in an electrolyte, the second adhesive layer is more easily detached from the first substrate layer.

According to some embodiments of the present application, the second insulator further includes a second substrate layer, the second substrate layer being connected to the inner surface of the innermost turn of the second electrode plate through the second adhesive layer. Accordingly, on the one hand, the second adhesive layer and the second substrate layer attached to the inner surface of the first corner segment effectively prevent positive ions from escaping; on the other hand, the first separator, the second separator and the superimposed first adhesive layer and first substrate layer covering the first winding start end can effectively alleviate the technical problem of short-circuiting between the positive and negative electrode plates caused by the first winding start end protruding beyond the second winding start end.

According to some embodiments of the present application, an elongation rate of the second substrate layer is greater than an elongation rate of the second electrode plate. Accordingly, the force exerted by a bent portion of the second substrate layer on the innermost turn of the second electrode plate is reduced, thereby alleviating the probability of fracture of the innermost turn of the second electrode plate.

According to some embodiments of the present application, the second substrate layer has an elongation rate of A and the first substrate layer has an elongation rate of B, where A is greater than B. Accordingly, since the elongation rate of the second substrate layer is greater than the elongation rate of the first substrate layer, the second substrate layer does not exert excessive elastic force on the first corner segment, thereby alleviating the problem of easy fracture of the first corner segment, and the first substrate layer can better press the first separator and the second separator together, reducing the technical problem of detachment of the first substrate layer from the first separator and the second separator caused by vibration or drop tests.

According to some embodiments of the present application, a third adhesive layer is further disposed between the first insulator and the second insulator, and after the electrode assembly is immersed in an electrolyte, the third adhesive layer is dissolved in the electrolyte so as to separate the first insulator from the second insulator. Since insulating components are disposed on both the inner side surface of the innermost turn of the second electrode plate and the first winding start end, the probability of short-circuiting between the positive and negative electrode plates caused by the first winding start end protruding beyond the second winding start end is further reduced.

According to some embodiments of the present application, the third adhesive layer is an acrylic adhesive layer or a rubber layer.

According to some embodiments of the present application, a side of the second electrode plate facing the first winding start end is provided with a blank region free of active material, the blank region being adapted to at least partially accommodate the insulator. By providing the blank region free of active material on the side of the second electrode plate facing the first winding start end, at least a portion of the insulator can be accommodated in the blank region, thereby reducing the thickness of a portion of the second electrode plate facing the first winding start end and increasing the energy density of the battery cell.

According to some embodiments of the present application, the first electrode plate is a negative electrode plate and the second electrode plate is a positive electrode plate.

In a second aspect, an embodiment of the present application provides a battery cell including the electrode assembly of the above embodiments.

In a third aspect, an embodiment of the present application provides an electrical device including the battery cell of the above embodiments.

Additional aspects and advantages of the present application will be set forth in part in the description which follows, and in part will be obvious from the description, or may be learned by practice of the present application.

### BRIEF DESCRIPTION OF DRAWINGS

In order to more clearly illustrate the technical solutions of the embodiments of the present application, the drawings required in the embodiments will be briefly introduced below. It should be understood that the following drawings only show certain embodiments of the present application and therefore should not be considered as limiting the scope. For those of ordinary skill in the art, other related drawings can also be obtained according to these drawings without creative efforts.
FIG. 1 is a schematic view of an electrode assembly provided by an embodiment of the present application;
FIG. 2 is a partially enlarged schematic view of a portion A circled in FIG. 1;
FIG. 3 is a schematic view of an insulator provided by an embodiment of the present application;
FIG. 4 is a schematic view of an insulator provided by an embodiment of the present application immersed in an electrolyte;
FIG. 5 is a schematic view of an insulator provided by another embodiment of the present application;
FIG. 6 is a schematic view of an insulator provided by another embodiment of the present application immersed in an electrolyte;
FIG. 7 is a schematic view of the insulator provided by another embodiment of the present application immersed in an electrolyte; and
FIG. 8 is a schematic view of an electrode assembly provided by another embodiment of the present application.

Reference signs: electrode assembly 100,
first electrode plate 110, first winding start end 111,
second electrode plate 120, first corner segment 121, first straight segment 122, second straight segment 123,
separator 130, second winding start end 131, first separator 132, second separator 133,
insulator 140, first section a, second section b, third section c, first insulator e, second insulator d,
first substrate layer 141b, second substrate layer 141a, third adhesive layer 141c, second adhesive layer 142, first adhesive layer 143,
first side surface 101, second side surface 102, blank region 103, thickness direction of the electrode assembly, X, and length direction of the electrode assembly, Y.

### DESCRIPTION OF EMBODIMENTS

To make the objects, technical solutions and advantages of the embodiments of the present application clearer, the technical solutions in the embodiments of the present application will be clearly and completely described below in conjunction with the drawings in the embodiments of the present application. Obviously, the described embodiments are a part of the embodiments of the present application, rather than all of the embodiments. Based on the embodiments in the present application, all other embodiments obtained by those of ordinary skill in the art without creative efforts fall within the protection scope of the present application.

Unless otherwise defined, all technical and scientific terms used in the present application have the same meanings as those commonly understood by those skilled in the technical field to which the present application belongs; the terms used in the specification of the present application are only for the purpose of describing specific embodiments and are not intended to limit the present application; the terms "comprise/include" and "have" and any variations thereof in the specification, claims and the above description of the drawings of the present application are intended to cover non-exclusive inclusion. The terms "first", "second" and the like in the specification and claims of the present application or in the above drawings are used to distinguish different objects, rather than to describe a specific order or primary-secondary relationship.

Reference in the present application to "embodiment" means that a particular feature, structure or characteristic described in connection with the embodiment may be included in at least one embodiment of the present application. The appearance of this phrase in various places in the specification does not necessarily refer to the same embodiment, nor is it an independent or alternative embodiment that is mutually exclusive with other embodiments. It is explicitly and implicitly understood by persons skilled in the art that the embodiments described in the present application may be combined with other embodiments.

In the description of the present application, it should be noted that, unless otherwise clearly specified and limited, the terms "mounted", "connected", "connection", "attached" should be understood in a broad sense. For example, they can refer to a fixed connection, a detachable connection, or an integral connection; they can refer to direct connection or indirect connection through an intermediate medium, and can refer to the internal communication of two components. For those of ordinary skill in the art, the specific meanings of the above terms in the present application can be understood according to specific situations.

The term "and/or" in the present application is merely a description of the association relationship of associated objects, indicating that there can be three relationships, for example, A and/or B, which can mean: A exists alone, A and B exist together, and B exists alone. In addition, the character "/" in the present application generally indicates that the associated objects before and after are in an "or" relationship.

The "plurality" appearing in the present application refers to more than two (including two). Similarly, "a plurality of groups" refers to more than two groups (including two groups), and "a plurality of pieces" refer to more than two pieces (including two pieces).

In the prior art, the MMT (Mid-Mid-Tab, where the positive tab is disposed in the middle of the positive electrode plate and the negative tab is disposed in the middle of the negative tab) structure generally adopts a winding needle to clamp the separator for winding, resulting in four layers of separator in the innermost turn and an increase in the thickness of the battery cell, thereby causing the problem of energy density loss in the thickness direction of the battery cell.

In the prior art, the process of flat cutting the electrode plate and the separator can generally be adopted to solve the technical problem of four layers of separator appearing in the inner turn of the electrode assembly. The electrode plate includes an electrode plate starting section, which is located at the inner portion of the electrode plate in the winding direction of the electrode plate; the separator includes a separator starting section, which is located at the inner portion of the separator in the winding direction of the separator. The flat cutting process of the electrode plate and the separator can be: the starting end of the electrode plate starting section is aligned with the starting end of the separator starting section, so that no multi-layer separator without covering the electrode plate appears in the inner turn of the electrode assembly, alleviating the problem of energy density loss in the thickness direction of the electrode assembly caused by the multi-layer separator in the inner turn.

However, in the flat cutting process of the electrode plate and the separator, since the starting end of the electrode plate starting section is aligned with the starting end of the separator starting section, the starting end of the separator starting section does not exceed the starting end of the electrode plate starting section, or the distance between the starting end of the separator starting section and the starting end of the electrode plate starting section is small, so that after the battery cell is rolled or subjected to a drop test, the separator will shrink, causing the starting end of the electrode plate starting section to protrude from the separator starting section, thereby exposing the starting end of the electrode plate starting section, which easily causes the problem of short-circuiting due to contact between two electrode plates of opposite polarities.

In view of this, the embodiments of the present application propose an electrode assembly 100, which can not only solve the problem of increased thickness of the battery cell caused by the multi-layer separator in the innermost turn of the electrode assembly, but also alleviate the problem of exposure of the electrode plate caused by separator shrinkage, which in turn easily causes short-circuiting due to contact between two electrode plates of opposite polarities.

In some embodiments of the present application, the electrode assembly 100 is configured as a wound structure, which is formed by fixing a winding needle and winding the stripped first electrode plate 110, separator 130 and second electrode plate 120 in sequence to be squeezed into a cylindrical, elliptical cylindrical or prismatic shape, and then placing the product into a suitable housing, with parameters such as the size of the electrode plate and the number of winding turns being determined according to the designed capacity of the battery.

The electrode assembly 100 includes a first electrode plate 110, a second electrode plate 120, and a separator 130, the separator 130 being disposed between the first electrode plate 110 and the second electrode plate 120, the first electrode plate 110 and the second electrode plate 120 being electrode plates of opposite polarities, one of the first electrode plate 110 and the second electrode plate 120 being a positive electrode plate and the other of the first electrode plate 110 and the second electrode plate 120 being a negative electrode plate. During charging and discharging of the battery cell, active ions (for example, lithium ions) are repeatedly intercalated and deintercalated between the first electrode plate 110 and the second electrode plate 120. The separator 130 is disposed between the first electrode plate 110 and the second electrode plate 120, which can prevent short-circuiting between the first electrode plate 110 and the second electrode plate 120 while allowing active ions to pass through.

The positive electrode plate may include a positive current collector and a positive active material disposed on at least one surface of the positive current collector. Similarly, the negative electrode plate may include a negative current collector and a negative active material disposed on at least one surface of the negative current collector. There is no particular limitation on the type of the separator 130 in the present application, and any porous separator having good chemical stability and mechanical stability known in the art may be selected.

As an example, the positive current collector may be a metal foil or a composite current collector. For example, as a metal foil, aluminum subjected to silver plating treatment on the surface, stainless steel subjected to silver plating treatment on the surface, stainless steel, copper, aluminum, nickel, carbon electrode, carbon, nickel, titanium, or the like may be used. The composite current collector may include a polymer material base layer and a metal layer. The composite current collector may be formed by forming a metal material (aluminum, aluminum alloy, nickel, nickel alloy, titanium, titanium alloy, silver, silver alloy, or the like) on a polymer material substrate (such as a substrate of polypropylene, polyethylene terephthalate, polybutylene terephthalate, polystyrene, polyethylene, or the like).

As an example, the positive active material may include at least one of the following materials: lithium-containing phosphate, lithium transition metal oxide and their respective modified compounds. However, the present application is not limited to these materials, and other conventional materials that can be used as battery positive active materials may also be used.

The negative active material may be a negative active material known in the art for batteries. As an example, the negative active material may include at least one of the following materials: artificial graphite, natural graphite, soft carbon, hard carbon, silicon-based material, tin-based material, lithium titanate, or the like. The silicon-based material may be selected from at least one of elemental silicon, silicon oxide compound, silicon-carbon composite, silicon-nitrogen composite and silicon alloy. The tin-based material may be selected from at least one of elemental tin, tin oxide compound and tin alloy. However, the present application is not limited to these materials, and other conventional materials that can be used as battery negative active materials may also be used. These negative active materials may be used alone or in combination of two or more.

As an example, the main material of the separator 130 may be selected from at least one of glass fiber, non-woven fabric, polyethylene, polypropylene and polyvinylidene fluoride, and ceramic. The separator 130 may be a single-layer film or a multi-layer composite film, without particular limitation. When the separator 130 is a multi-layer composite film, the materials of each layer may be the same or different, without particular limitation. The separator 130 may be a separate component located between the positive and negative electrodes, or may be attached to the surface of the positive and negative electrodes.

In some embodiments, the separator 130 is a solid electrolyte. The solid electrolyte is disposed between the positive electrode and the negative electrode, and simultaneously serves to transport ions and isolate the positive and negative electrodes.

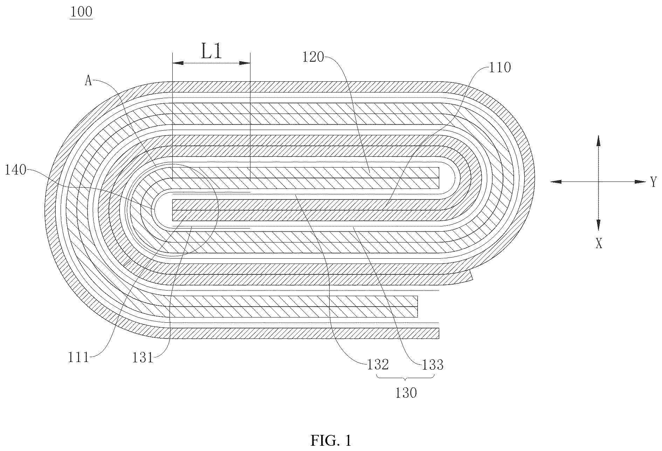

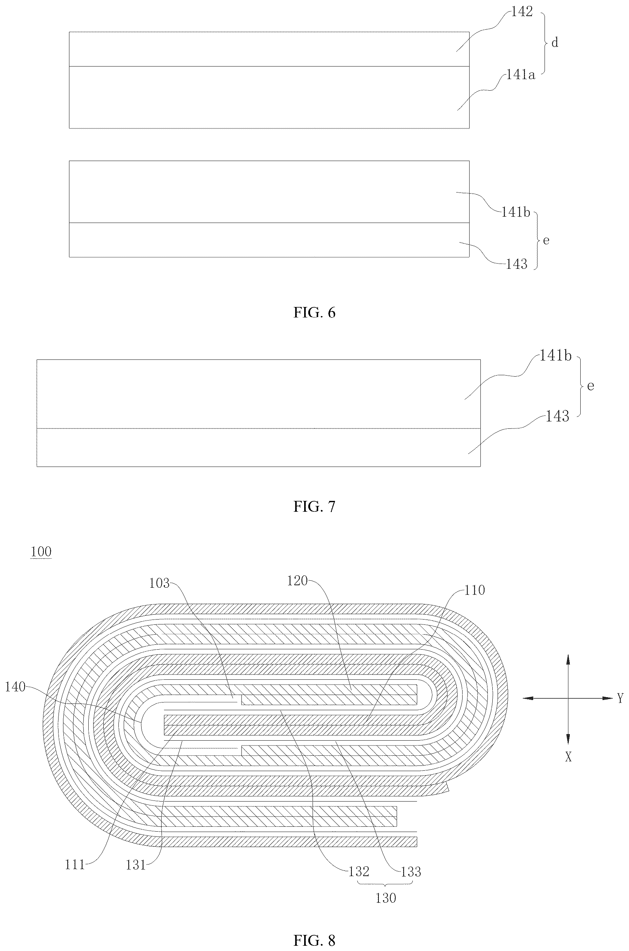

As shown in FIG. 1 and FIG. 8, the first electrode plate 110 includes a first winding start end 111, the separator 130 includes a second winding start end 131, and along the winding direction of the electrode assembly 100, the distance between the first winding start end 111 and the second winding start end 131 is not greater than 5 mm. The first winding start end 111 is the end of the first electrode plate 110 that enters the winding first, and the second winding start end 131 is the end of the separator 130 that enters the winding first. In the embodiments of the present application, the first electrode plate 110 and the separator 130 adopt a flat cutting process, so the first winding start end 111 and the second winding start end 131 are aligned. The alignment in the embodiments of the present application means that the distance between the first winding start end 111 and the second winding start end 131 is not greater than 5 mm. The first winding start end 111 may protrude beyond the second winding start end 131 by a distance not greater than 5 mm, or the first winding start end 111 may be completely aligned with the second winding start end 131, or the second winding start end 131 may protrude beyond the first winding start end 111 by a distance not greater than 5 mm.

In some embodiments of the present application, the electrode assembly 100 further includes an insulator 140 disposed between the innermost turn of the second electrode plate 120 and the first winding start end 111 to separate the first winding start end 111 from the second electrode plate 120.

The insulator 140 may be made of a non-conductive material, for example, the insulator 140 may be a plastic member, a rubber member, or the like. The insulator 140 being disposed between the innermost turn of the second electrode plate 120 and the first winding start end 111 means that the insulator 140 may be disposed on a side of the innermost turn of the second electrode plate 120 facing the first winding start end 111, or the insulator 140 may be disposed on the first winding start end 111, or the insulator 140 may be disposed in a gap separating the innermost turn of the second electrode plate 120 from the first winding start end 111. Certainly, it can be understood that if the insulator 140 is disposed on the separator 130 on the first winding start end 111, it can also be considered that the insulator 140 is disposed on the first winding start end 111.

Accordingly, even if the separator 130 shrinks after the battery cell is dropped or subjected to a drop test, such that the first winding start end 111 and the second winding start end 131, which were originally aligned with each other, are no longer aligned or the distance therebetween increases, thereby causing the first winding start end 111 to be exposed from between two layers of separator 130, short-circuiting caused by contact between the first winding start end 111 and the second electrode plate 120 can still be avoided due to the presence of the insulator 140 disposed between the first winding start end 111 and the innermost turn of the second electrode plate 120.

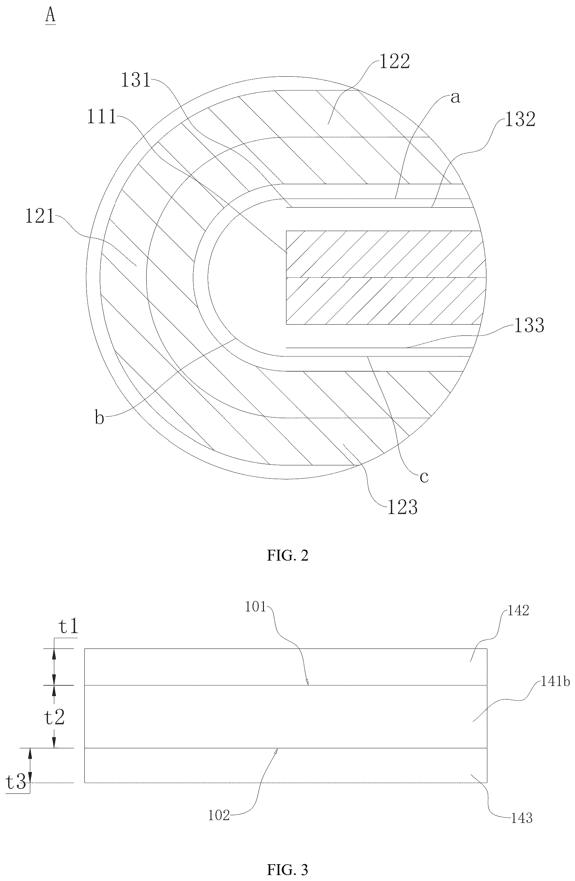

In some embodiments of the present application, as shown in FIG. 1 and FIG. 2, the innermost turn of the second electrode plate 120 includes a first corner segment 121, the first corner segment 121 being disposed opposite to the first winding start end 111, and at least a portion of the insulator 140 is disposed between the first corner segment 121 and the first winding start end 111.

The first corner segment 121 may be the first corner segment in the winding direction of the innermost turn of the second electrode plate 120. The first corner segment 121 may only include an arc-shaped segment, or the first corner segment 121 may also include an arc-shaped segment and straight segments connected to both ends of the arc-shaped segment. The specific structure of the first corner segment 121 is not limited in the embodiments of the present application, as long as the first corner segment 121 is disposed near the first winding start end 111.

In some embodiments of the present application, the first corner segment 121 is disposed opposite to the first winding start end 111, the first corner segment 121 may be disposed near the first winding start end 111, and the first corner segment 121 may be directly opposite to the first winding start end 111 in the length direction Y of the electrode assembly 100. A portion of the first corner segment 121 may be directly opposite to the first winding start end 111 in the length direction Y of the electrode assembly 100, and another portion of the first corner segment 121 may also be directly opposite to the first winding start end 111 in the thickness direction X of the electrode assembly 100.

At least a portion of the insulator 140 is disposed between the first corner segment 121 and the first winding start end 111. That is, at least a portion of the insulator 140 may be disposed on a region of the first corner segment 121 facing the first winding start end 111, at least a portion of the insulator 140 may also be disposed on a region of the first winding start end 111 facing the first corner segment 121, and certainly, at least a portion of the insulator 140 may also be disposed in a gap between the first corner segment 121 and the first winding start end 111, as long as at least a portion of the insulator 140 is disposed between the first corner segment 121 and the first winding start end 111.

In some embodiments of the present application, a portion of the insulator 140 may be disposed between the first corner segment 121 and the first winding start end 111 in the length direction Y of the electrode assembly 100, and a portion of the insulator 140 may also be disposed between the first corner segment 121 and the first winding start end 111 in the length direction Y of the electrode assembly 100.

For example, a portion of the insulator 140 may be disposed on a region of the first corner segment 121 facing the first winding start end 111 in the length direction Y of the electrode assembly 100, and a portion of the insulator 140 may also be disposed on a region of the first winding start end 111 facing the first corner segment 121 in the length direction Y of the electrode assembly 100.

Since at least a portion of the insulator 140 is disposed between the first corner segment 121 and the first winding start end 111, even if the separator 130 shrinks and the first winding start end 111 protrudes beyond the second winding start end 131, the first winding start end 111 is blocked by the insulator 140, thereby avoiding the technical problem of short-circuiting between the positive and negative electrode plates caused by contact between the first winding start end 111 and the first corner segment 121. In this embodiment, the insulator 140 may not prevent the separator 130 from shrinking, but prevents contact between the first winding start end 111 and the first corner segment 121 by being disposed therebetween.

In some embodiments of the present application, as shown in FIG. 1 and FIG. 2, the separator 130 includes a first separator 132 and a second separator 133 located on two sides of the first electrode plate 110. It should be noted that the two sides of the first electrode plate 110 refer to the two sides in the thickness direction of the first electrode plate 110.

The insulator 140 extends around the first winding start end 111, and two ends of the insulator 140 are connected to the first separator 132 and the second separator 133, respectively. The first winding start end 111 has an end face, and the insulator 140 extends around the end face of the first winding start end 111 and is bent to be connected to the first separator 132 and the second separator 133, respectively. That is, the insulator 140 may be configured as a "C"-shaped structure, and after the insulator 140 is connected to the first separator 132 and the second separator 133, the insulator 140 can wrap the end face of the first winding start end 111.

Since the insulator 140 extends around the first winding start end 111 and is connected to the first separator 132 and the second separator 133, respectively, shrinkage of the separator 130 can be restricted, effectively alleviating the problem of the first winding start end 111 protruding from the second winding start end 131.

In some embodiments of the present application, as shown in FIG. 2, the innermost turn of the second electrode plate 120 further includes a first straight segment 122 and a second straight segment 123, the first corner segment 121 is connected between the first straight segment 122 and the second straight segment 123, and the first straight segment 122, the first corner segment 121, and the second straight segment 123 surround at least a portion of the first winding start end 111. The first straight segment 122, the first corner segment 121, and the second straight segment 123 may be sequentially disposed along the winding direction of the second electrode plate 120.

The first corner segment 121 may be configured as an arc-shaped segment, the first straight segment 122 and the second straight segment 123 may be disposed at both ends of the arc-shaped segment without bending and configured as two straight segments, and the first straight segment 122, the first corner segment 121 and the second straight segment 123 may be configured as a "C"-shaped structure. The "C"-shaped structure formed by the first straight segment 122, the first corner segment 121 and the second straight segment 123 surrounds at least a portion of the first winding start end 111.

The insulator 140 includes a first section a, a second section b and a third section c sequentially disposed along the winding direction of the first electrode plate 110, the first section a being disposed between the first straight segment 122 and the first separator 132, the second section b being disposed between the first corner segment 121 and the first winding start end 111, and the third section c being disposed between the second straight segment 123 and the second separator 133.

The first section a, the second section b and the third section c may be configured as a "C"-shaped structure, that is, the shape of the insulator 140 may be substantially the same as the shape of the first corner segment 121, so that the insulator 140 can better cover the first winding start end 111, thereby effectively alleviating the short-circuiting problem caused by contact between the first winding start end 111 and the innermost turn of the second electrode plate 120.

The first section a is disposed between the first straight segment 122 and the first separator 132, that is, the first section a, the first straight segment 122 and the first separator 132 are opposite in the thickness direction X of the electrode assembly 100; the second section b is disposed between the first corner segment 121 and the first winding start end 111, that is, the second section b, the first corner segment 121 and the end face of the first winding start end 111 are directly opposite in the length direction Y of the electrode assembly 100; the third section c is disposed between the second straight segment 123 and the second separator 133, that is, the third section c, the second straight segment 123 and the second separator 133 are opposite in the thickness direction X of the electrode assembly 100.

Accordingly, the insulator 140 can cover the first winding start end 111 from multiple angles and in multiple directions, being disposed not only between the innermost turn of the second electrode plate 120 and the first winding start end 111 in the thickness direction X of the electrode assembly 100, but also between the innermost turn of the second electrode plate 120 and the first winding start end 111 in the length direction Y of the electrode assembly 100. Thus, the innermost turn of the second electrode plate 120 is isolated from the first winding start end 111 to the greatest extent, alleviating short-circuiting caused by contact between the innermost turn of the second electrode plate 120 and the first winding start end 111.

In some embodiments of the present application, as shown in FIG. 3 to FIG. 6, the insulator 140 includes a first insulator e, the first insulator e being connected to the first separator 132 and the second separator 133. The first insulator e can cover the first winding start end 111, thereby reducing the probability of contact and short-circuiting between the positive and negative electrode plates caused by the first winding start end 111 protruding beyond the second winding start end 131.

The first insulator e may include a first substrate layer 141b and a first adhesive layer 143, the first substrate layer 141b being connected to the first separator 132 and the second separator 133 through the first adhesive layer 143. When the electrode assembly 100 is not immersed in an electrolyte, the first substrate layer 141b may be connected to the inner surface of the innermost turn of the second electrode plate 120 by means of a second adhesive layer 142.

The first substrate layer 141b can ensure the insulation performance of the insulator 140 and provide certain strength, while the first adhesive layer 143 can ensure that the first substrate layer 141b is adhesively attached to the first separator 132 and the second separator 133. Certainly, the first adhesive layer 143 may also have insulation performance, which is not limited in the embodiments of the present application.

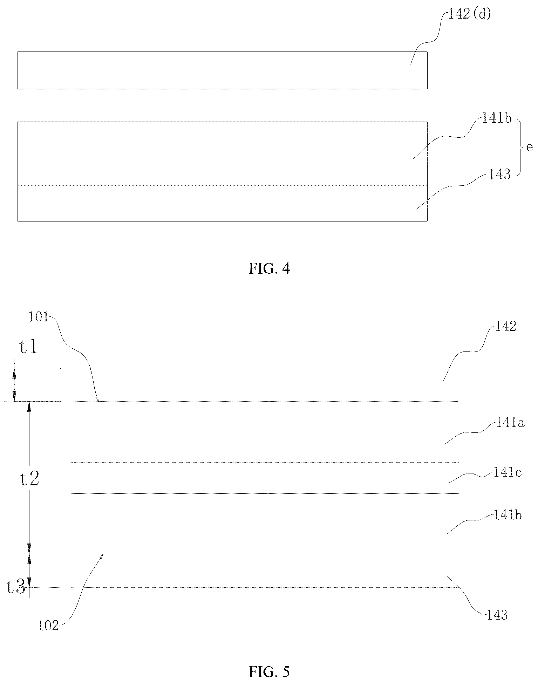

In some embodiments of the present application, as shown in FIG. 3 and FIG. 5, the thickness t2 of the first substrate layer 141b may be 5 mm to 50 mm. The thickness t2 of the first substrate layer 141b directly determines whether the second electrode plate 120 winds smoothly. A larger thickness t2 of the first substrate layer 141b results in a greater bending difficulty of the first corner segment 121 of the second electrode plate 120 during winding; a smaller thickness t2 of the first substrate layer 141b results in a smaller bending difficulty of the first corner segment 121 of the second electrode plate 120 during winding. Moreover, a thicker first substrate layer 141b after bending will also exert a larger elastic force on the first corner segment 121, which easily causes the problem of fracture of the first corner segment 121.

In the embodiments of the present application, the thickness t2 of the first substrate layer 141b is limited to 5 µm to 50 µm. This not only ensures that the first substrate layer 141b can prevent short-circuiting between the positive and negative electrode plates, but also alleviates the problem of fracture of the first corner segment 121 during winding of the electrode assembly 100 caused by disposing an excessively thick first substrate layer 141b between the first corner segment 121 and the first winding start end 111.

For example, the thickness t2 of the first substrate layer 141b may be 5 µm, 10 µm, 15 µm, 20 µm, 25 µm, 30 µm, 35 µm, 40 µm, 45 µm or 50 µm. The embodiments of the present application do not specifically limit the thickness t2 of the first substrate layer 141b, as long as the thickness of the first substrate layer 141b falls within the above range.

In some embodiments of the present application, as shown in FIG. 1, the overlapping length L1 of the first adhesive layer 143 with the first separator 132 or the second separator 133 in the winding direction is 0.5 mm to 15 mm.

The first adhesive layer 143 and the first separator 132 may be adhesively fixed, the area of the adhesive region between the first adhesive layer 143 and the first separator 132 directly affects the adhesive force therebetween, and the overlapping length of the first adhesive layer 143 with the first separator 132 in the winding direction directly determines the area of the adhesive region between the first adhesive layer 143 and the first separator 132. The longer the overlapping length of the first adhesive layer 143 with the first separator 132 in the winding direction, the greater the adhesive force therebetween; the shorter the overlapping length of the first adhesive layer 143 with the first separator 132 in the winding direction, the smaller the adhesive force therebetween.

In the embodiments of the present application, the overlapping length of the first adhesive layer 143 with the first separator 132 or the second separator 133 in the winding direction is set to 0.5 mm to 15 mm, which not only ensures sufficient adhesive force between the first adhesive layer 143 and the first separator 132, but also avoids material waste caused by an excessively large overlapping length of the first adhesive layer 143 with the first separator 132 in the winding direction.

The first adhesive layer 143 and the second separator 133 may be adhesively fixed, the area of the adhesive region between the first adhesive layer 143 and the second separator 133 directly affects the adhesive force therebetween, and the overlapping length of the first adhesive layer 143 with the second separator 133 in the winding direction directly determines the area of the adhesive region between the first adhesive layer 143 and the second separator 133. The longer the overlapping length of the first adhesive layer 143 with the second separator 133 in the winding direction, the greater the adhesive force therebetween; the shorter the overlapping length of the first adhesive layer 143 with the second separator 133 in the winding direction, the smaller the adhesive force therebetween.

In the embodiments of the present application, the overlapping length of the first adhesive layer 143 with the first separator 132 or the second separator 133 in the winding direction is set to 0.5 mm to 15 mm, which not only ensures sufficient adhesive force between the first adhesive layer 143 and the second separator 133, but also avoids material waste caused by an excessively large overlapping length of the first adhesive layer 143 with the second separator 133 in the winding direction.

In some embodiments of the present application, the adhesive strength of the first adhesive layer 143 is not less than 0.05 N/mm. The first adhesive layer 143 needs sufficient adhesive strength to ensure that after the electrode assembly 100 is immersed in an electrolyte, the first adhesive layer 143 can still be adhesively fixed to the first separator 132 and the second separator 133.

The adhesive strength of the first adhesive layer 143 may be 0.05 N/mm, 0.1 N/mm, 0.15 N/mm, 0.2 N/mm, 0.25 N/mm, 0.3 N/mm, or the like. The embodiments of the present application do not limit the adhesive strength of the first adhesive layer 143 in the electrolyte, as long as the adhesive strength of the first adhesive layer 143 in the electrolyte is within the above range.

In some embodiments of the present application, as shown in FIG. 3 and FIG. 5, the thickness t3 of the first adhesive layer 143 is 2 µm to 20 µm. The thickness t3 of the first adhesive layer 143 directly determines the adhesive force between the first adhesive layer 143 and the first separator 132 and the second separator 133. A larger thickness t3 of the first adhesive layer 143 results in a greater adhesive force between the first adhesive layer 143 and the first separator 132 and the second separator 133; a smaller thickness t3 of the first adhesive layer 143 results in a smaller adhesive force between the first adhesive layer 143 and the first separator 132 and the second separator 133.

In the embodiments of the present application, the thickness t3 of the first adhesive layer 143 is limited to 2 µm to 20 µm. This not only ensures that the first adhesive layer 143 can be firmly bonded to the first separator 132 and the second separator 133, but also alleviates material waste caused by an excessively thick first adhesive layer 143.

For example, the thickness t3 of the first adhesive layer 143 may be 2 µm, 5 µm, 8 µm, 11 µm, 14 µm, 17 µm or 20 µm. The embodiments of the present application do not specifically limit the thickness t3 of the first adhesive layer 143, as long as the thickness of the first adhesive layer 143 falls within the above range.

In some embodiments of the present application, as shown in FIG. 7, the insulator only includes the first insulator e connected to the first separator 132 and the second separator 133. That is, only one first insulator e is disposed between the innermost turn of the second electrode plate 120 and the first winding start end 111, and the first insulator e is only connected to the first separator 132 and the second separator 133, with no insulating component attached to the inner side surface of the innermost turn of the second electrode plate 120, so that the inner side surface of the innermost turn of the second electrode plate 120 is no longer subjected to elastic force generated by bending of the insulating component, greatly reducing the probability of fracture of the innermost turn of the second electrode plate 120.

Before electrolyte injection into the battery cell, the first insulator e may be connected to the inner side surface of the innermost turn of the second electrode plate 120 by means of an adhesive layer, and after electrolyte injection is completed, the electrode assembly 100 is immersed in the electrolyte, at which time the adhesive layer on the inner side surface of the innermost turn of the second electrode plate 120 is dissolved in the electrolyte, the first insulator e is separated from the innermost turn of the second electrode plate 120, and the first insulator e is connected to the first separator 132 and the second separator 133, thereby alleviating the phenomenon of short-circuiting between the positive and negative electrode plates caused by the first winding start end 111 protruding beyond the second winding start end 131 due to separator 130 shrinkage.

In some embodiments of the present application, before electrolyte injection into the battery cell, the first insulator e may be connected to the inner side surface of the innermost turn of the second electrode plate 120 by means of an adhesive layer, and after electrolyte injection is completed, the electrode assembly 100 is immersed in the electrolyte, at which time the adhesive layer on the inner side surface of the innermost turn of the second electrode plate 120 is not only detached from the first insulator e but also detached from the innermost turn of the second electrode plate 120, thereby separating the first insulator e from the innermost turn of the second electrode plate 120.

In some embodiments of the present application, as shown in FIG. 7, the first insulator e may include a first substrate layer 141b and a first adhesive layer 143, with specific connection manner and effects as described previously, which will not be repeated here. Certainly, the first insulator e may also be configured only as an adhesive layer, the first insulator e having not only insulation performance but also adhesive performance, and the first insulator e may be adhesively attached to the first separator 132 and the second separator 133. Accordingly, this not only reduces the probability of short-circuiting between the positive and negative electrode plates caused by contact between the first winding start end 111 and the innermost turn of the second electrode plate 120, but also reduces the energy density loss of the electrode assembly 100 in the thickness direction to a certain extent.

In some embodiments of the present application, the insulator further includes a second insulator d, the second insulator d being connected to the inner surface of the innermost turn of the second electrode plate 120. On the one hand, the second insulator d can reduce the probability of short-circuiting between the positive and negative electrode plates caused by contact between the first winding start end 111 and the innermost turn of the second electrode plate 120; on the other hand, the first insulator d can also effectively prevent positive ions on a side surface of the second electrode plate 120 facing the first winding start end 111 from escaping, reducing the problem of metal precipitation on the first winding start end 111.

In some embodiments of the present application, the second insulator d includes a second adhesive layer 142, the second adhesive layer 142 being connected to the inner surface of the innermost turn of the second electrode plate 120. The second adhesive layer 142 may be adhesively fixed to the inner surface of the innermost turn of the second electrode plate 120, and the second adhesive layer 142 may be configured as an insulating component, thereby reducing the probability of short-circuiting between the positive and negative electrode plates caused by contact between the first winding start end 111 and the innermost turn of the second electrode plate 120, while also effectively preventing positive ions on a side surface of the second electrode plate 120 facing the first winding start end 111 from escaping, reducing the problem of metal precipitation on the first winding start end 111.

In some embodiments of the present application, when the electrode assembly 100 is not immersed in an electrolyte, the first substrate layer 141b may be connected to the inner surface of the innermost turn of the second electrode plate 120 through the second adhesive layer 142, and after the electrode assembly 100 is immersed in an electrolyte, the first substrate layer 141b may be detached from the second electrode plate 120.

Accordingly, after the electrode assembly 100 is immersed in an electrolyte, the entire first substrate layer 141b is not always attached to the inner surface of the innermost turn of the second electrode plate 120, thereby reducing the probability of fracture of the first corner segment 121 of the second electrode plate 120 caused by elastic force generated by bending of the first substrate layer 141b being applied to the first corner segment 121.

Before winding of the electrode assembly 100, the first substrate layer 141b is first adhesively attached to the second electrode plate 120 through the second adhesive layer 142, at which time the first adhesive layer 143 on the first substrate layer 141b is not adhesively attached to the first separator 132 and the second separator 133; then during winding, a portion of the innermost turn on the second electrode plate 120 is bent, so that a portion of the innermost turn of the second electrode plate 120 forms the first corner segment 121, while the first substrate layer 141b, the second adhesive layer 142 and the first adhesive layer 143 attached to the inner side surface of the first corner segment 121 are also bent, and then the first adhesive layer 143 is adhesively attached to the first separator 132 and the second separator 133.

After the electrode assembly 100 is immersed in an electrolyte, if the first substrate layer 141b is still adhesively attached to the inner surface of the innermost turn of the second electrode plate 120 through the second adhesive layer 142, elastic stress generated by bending of the first substrate layer 141b will be applied to the inner side surface of the first corner segment 121, which may cause the problem of fracture of the first corner segment 121.

In some embodiments of the present application, after the electrode assembly 100 is immersed in an electrolyte, the second adhesive layer 142 is separated from the first insulator e (for example, the first substrate layer 141b). That is, the adhesive force between the second adhesive layer 142 and the first substrate layer 141b is lower than the adhesive force between the first adhesive layer 143 and the first substrate layer 141b, so that after the electrode assembly 100 is immersed in an electrolyte, the second adhesive layer 142 is more easily detached from the first substrate layer 141b, while the first substrate layer 141b and the first adhesive layer 143 are adhesively attached together, and the first substrate layer 141b is adhesively attached to the first separator 132 and the second separator 133 through the first adhesive layer 143.

According to some embodiments of the present application, corona treatment may be performed on the surface of the first substrate layer 141b adhesively attached to the second adhesive layer 142 and the surface of the first substrate layer 141b adhesively attached to the first adhesive layer 143. Accordingly, after corona treatment of the first substrate layer 141b, the first adhesive layer 143 is more firmly adhesively attached to the first substrate layer 141b than the second adhesive layer 142.

The first substrate layer 141b includes a first side surface 101 connected to the second adhesive layer 142 and a second side surface 102 connected to the first adhesive layer 143, the roughness of the first side surface 101 being less than the roughness of the second side surface 102. It should be noted that the roughness of a surface is proportional to the adhesive force of an adhesive layer adhesively attached to the surface, that is, the greater the roughness of the surface, the greater the adhesive force between the adhesive layer and the surface after the adhesive layer is adhesively attached to the surface; the smaller the roughness of the surface, the smaller the adhesive force between the adhesive layer and the surface after the adhesive layer is adhesively attached to the surface.

Since the roughness of the first side surface 101 is less than the roughness of the second side surface 102, the adhesive force between the second adhesive layer 142 and the first side surface 101 is less than the adhesive force between the second side surface 102 and the first adhesive layer 143, so that after the electrode assembly 100 is immersed in an electrolyte, the second adhesive layer 142 is more easily detached from the first substrate layer 141b.

The roughness of the first side surface 101 and the roughness of the second side surface 102 may be achieved by corona treatment, or Certainly by other methods. The embodiments of the present application do not limit the formation manner of the roughness of the first side surface 101 and the roughness of the second side surface 102.

In some embodiments of the present application, after the electrode assembly 100 is immersed in an electrolyte, the second adhesive layer 142 is dissolved in the electrolyte. Accordingly, no component at all is adhesively attached to the inner surface of the innermost turn of the second electrode plate 120, thereby alleviating the fracture problem caused by elastic force generated by bending of the second adhesive layer 142 being applied to the innermost turn of the second electrode plate 120. Since the first winding start end 111 is covered by the first separator 132, the second separator 133 and the superimposed first substrate layer 141b and first adhesive layer 143, no exposed current collector is exposed on the first winding start end 111, so even if no second adhesive layer 142 is adhesively attached to the inner surface of the innermost turn of the second electrode plate 120, the problem of precipitation of positive ions will still not occur on the first winding start end 111.

In some embodiments of the present application, as shown in FIG. 3 and FIG. 5, the thickness t1 of the second adhesive layer 142 is 2 µm to 20 µm. The thickness of the second adhesive layer 142 directly determines whether the second electrode plate 120 winds smoothly. A larger thickness of the second adhesive layer 142 results in a greater bending difficulty of the first corner segment 121 of the second electrode plate 120 during winding; a smaller thickness of the second adhesive layer 142 results in a smaller bending difficulty of the first corner segment 121 of the second electrode plate 120 during winding. Moreover, a thicker second adhesive layer 142 after bending will also exert a larger elastic force on the first corner segment 121, which easily causes the problem of fracture of the first corner segment 121.

In the embodiments of the present application, the thickness t1 of the second adhesive layer 142 is limited to 2 µm to 20 µm. This not only ensures that the second adhesive layer 142 can prevent positive ions in the first corner segment 121 from escaping, but also alleviates the problem of fracture of the first corner segment 121 caused by disposing the second adhesive layer 142 on the inner side surface of the first corner segment 121.

For example, the thickness t1 of the second adhesive layer 142 may be 2 µm, 5 µm, 8 µm, 11 µm, 14 µm, 17 µm or 20 µm. The embodiments of the present application do not specifically limit the thickness t1 of the second adhesive layer 142, as long as the thickness of the second adhesive layer 142 falls within the above range.

In some embodiments of the present application, the adhesive strength of the second adhesive layer 142 in an electrolyte is 0.02 N/mm to 0.4 N/mm. The second adhesive layer 142 needs sufficient adhesive strength to ensure that after the electrode assembly 100 is immersed in an electrolyte, the second adhesive layer 142 can still be adhesively fixed to the inner surface of the innermost turn of the second electrode plate 120.

The adhesive strength of the second adhesive layer 142 in an electrolyte may be 0.02 N/mm, 0.05 N/mm, 0.1 N/mm, 0.15 N/mm, 0.2 N/mm, 0.25 N/mm, 0.3 N/mm, 0.35 N/mm or 0.4 N/mm. The embodiments of the present application do not limit the adhesive strength of the second adhesive layer 142 in an electrolyte, as long as the adhesive strength of the second adhesive layer 142 in an electrolyte is within the above range.

In other embodiments of the present application, as shown in FIG. 5 and FIG. 6, the second insulator d further includes a second substrate layer 141a, which together with the first substrate layer 141b can serve for insulation. The second adhesive layer 142 is disposed between the second substrate layer 141a and the inner side surface of the innermost turn of the second electrode plate 120.

The second adhesive layer 142 and the second substrate layer 141a are adhesively attached to the inner surface of the innermost turn of the second electrode plate 120, and the first adhesive layer 143 and the first substrate layer 141b are adhesively attached to the first separator 132 and the second separator 133. Accordingly, on the one hand, the second adhesive layer 142 and the second substrate layer 141a attached to the inner surface of the first corner segment 121 effectively prevent positive ions from escaping; on the other hand, the first separator 132, the second separator 133 and the superimposed first adhesive layer 143 and first substrate layer 141b covering the first winding start end 111 can effectively alleviate the technical problem of short-circuiting between the positive and negative electrode plates caused by the first winding start end 111 protruding beyond the second winding start end 131.

In some embodiments of the present application, the elongation rate of the second substrate layer 114a is greater than the elongation rate of the second electrode plate 120, so that when the second substrate layer 114a is adhesively attached to the inner side surface of the first corner segment 121 of the second electrode plate 120 through the second adhesive layer 142, the bent second substrate layer 114a with a larger elongation rate does not exert excessive elastic force on the first corner segment 121, thereby alleviating the problem of easy fracture of the first corner segment 121.

The elongation rate of the second substrate layer 114a is A, and the elongation rate of the first substrate layer 114b is B, with the elongation rate A of the second substrate layer 114a being greater than the elongation rate B of the first substrate layer 114b. Accordingly, the force exerted by the bent portion of the second substrate layer 114a on the innermost turn of the second electrode plate 120 is reduced, thereby alleviating the probability of fracture of the innermost turn of the second electrode plate 120. Since the first substrate layer 114b is adhesively fixed to the first separator 132 and the second separator 133 through the first adhesive layer 143, there is no excessive requirement on the elongation rate of the first substrate layer 114b. Certainly, the elongation rate of the first substrate layer 114b cannot be excessively large, preferably less than the elongation rate of the second substrate layer 114a, so that the first substrate layer 114b can better press the first separator 132 and the second separator 133 together, reducing the technical problem of detachment of the first substrate layer 114b from the first separator 132 and the second separator 133 caused by vibration or drop tests.

In some embodiments of the present application, the elongation rate of the second substrate layer 114a is A, and the elongation rate of the first substrate layer 114b is B, where A is greater than B. Accordingly, since the elongation rate of the second substrate layer 114a is greater than the elongation rate of the first substrate layer 114b, the second substrate layer 114a does not exert excessive elastic force on the first corner segment 121, thereby alleviating the problem of easy fracture of the first corner segment 121, and the first substrate layer 114b can better press the first separator 132 and the second separator 133 together, reducing the technical problem of detachment of the first substrate layer 114b from the first separator 132 and the second separator 133 caused by vibration or drop tests.

In some embodiments of the present application, a third adhesive layer 141c is further disposed between the first insulator e and the second insulator d, and after the electrode assembly 100 is immersed in an electrolyte, the third adhesive layer 141c is dissolved in the electrolyte to separate the first insulator e from the second insulator d. Accordingly, insulating components are disposed on both the inner side surface of the innermost turn of the second electrode plate 120 and the first winding start end 111, further reducing the probability of short-circuiting between the positive and negative electrode plates caused by the first winding start end 111 protruding beyond the second winding start end 131.

According to some embodiments of the present application, the third adhesive layer 141c is an acrylic adhesive layer or a rubber layer. By configuring the third adhesive layer 141c as an acrylic adhesive layer or a rubber layer, it can dissolve after the electrode assembly 100 is immersed in an electrolyte, thereby achieving dissolution of the third adhesive layer 141c in the electrolyte after the electrode assembly 100 is immersed in the electrolyte to separate the second substrate layer 141a from the first substrate layer 141b. The present application does not limit the specific type of the third adhesive layer 141c, as long as the third adhesive layer 141c dissolves in the electrolyte after the electrode assembly 100 is immersed in the electrolyte.

In some embodiments of the present application, after the electrode assembly 100 is immersed in an electrolyte, the third adhesive layer 141c is separated from the first insulator e and also separated from the second insulator d.

As described in the above embodiments, the first insulator e includes a first substrate layer 141b and a first adhesive layer 143, the first substrate layer 141b being adhesively attached to the first separator 142 and the second separator 143 through the first adhesive layer 143; the second insulator d includes a second substrate layer 141a and a second adhesive layer 142, the second substrate layer 141a being adhesively attached to the inner side surface of the innermost turn of the second electrode plate 120 through the second adhesive layer 142.

When the electrode assembly 100 is not immersed in an electrolyte, the side of the first substrate layer 141b facing away from the first adhesive layer 143 is adhesively fixed to the third adhesive layer 141c, and the side of the second substrate layer 141a facing away from the second adhesive layer 142 is adhesively fixed to the third adhesive layer 141c. After the electrode assembly 100 is immersed in an electrolyte, the third adhesive layer 141c is separated from the first substrate layer 141b and also separated from the second substrate layer 141a.

Corona treatment may be performed on the surface of the second substrate layer 141a adhesively attached to the third adhesive layer 141c and the surface of the first substrate layer 141b adhesively attached to the third adhesive layer 141c. Accordingly, after corona treatment of the first substrate layer 141b and the second substrate layer 141a and after the electrode assembly 100 is immersed in an electrolyte, the third adhesive layer 141c can be easily detached from the second substrate layer 141a and the first substrate layer 141b.

The roughness of the surface of the second substrate layer 141a adhesively attached to the third adhesive layer 141c may be set to be relatively small, thereby facilitating easy detachment of the third adhesive layer 141c from the second substrate layer 141a after the electrode assembly 100 is immersed in an electrolyte. The roughness of the surface of the first substrate layer 141b adhesively attached to the third adhesive layer 141c may also be set to be relatively small, thereby facilitating easy detachment of the third adhesive layer 141c from the first substrate layer 141b after the electrode assembly 100 is immersed in an electrolyte.

It should be noted that the roughness of a surface is proportional to the adhesive force of an adhesive layer adhesively attached to the surface, that is, the greater the roughness of the surface, the greater the adhesive force between the adhesive layer and the surface after the adhesive layer is adhesively attached to the surface; the smaller the roughness of the surface, the smaller the adhesive force between the adhesive layer and the surface after the adhesive layer is adhesively attached to the surface.

The roughness of the surface of the second substrate layer 141a adhesively attached to the third adhesive layer 141c may be the same as the roughness of the surface of the first substrate layer 141b adhesively attached to the third adhesive layer 141c. The roughness of the surface of the second substrate layer 141a adhesively attached to the third adhesive layer 141c and the roughness of the surface of the first substrate layer 141b adhesively attached to the third adhesive layer 141c may be achieved by corona treatment, or Certainly by other methods. The embodiments of the present application do not limit the formation manner of the roughness.

In some embodiments of the present application, the first substrate layer 141b is configured as a PP (Polypropylene) material layer, a PI (Polyimide) material layer or a PET (Polyethylene terephthalate) material layer.

In some embodiments of the present application, the second substrate layer 141a may be a PP material layer or a PI material layer. PP material layers and PI material layers have good flexibility, and the substrate has low rebound force after bending, so that when the second substrate layer 141a is adhesively attached to the inner surface of the innermost turn of the second electrode plate 120 through the second adhesive layer 142, the elastic force exerted by the second substrate layer 141a on the first corner segment 121 is small, thereby effectively alleviating the problem of easy fracture of the first corner segment 121.

The first substrate layer 141b may be a PET material layer. The flexibility of a PET material layer is inferior to that of a PP material layer or a PI material layer, so that a PET material layer can better press the first separator 132 and the second separator 133 together, reducing the technical problem of detachment of the first substrate layer 141b from the first separator 132 and the second separator 133 caused by vibration or drop tests.

In some embodiments of the present application, as shown in FIG. 8, a side of the second electrode plate 120 facing the first winding start end 111 is provided with a blank region 103 free of active material, the blank region 103 being adapted to at least partially accommodate the insulator 140. Since the insulator 140 is disposed between the innermost turn of the second electrode plate 120 and the first winding start end 111, at least a portion of the insulator 140, for example, the second adhesive layer 142 of the insulator 140 is adhesively attached to the innermost turn of the second electrode plate 120, or the second adhesive layer 142 and the second substrate layer 141a of the insulator 140 are adhesively attached to the innermost turn of the second electrode plate 120, a region of the innermost turn of the second electrode plate 120 facing the first winding start end 111 is blocked by at least a portion of the insulator 140 and does not participate in charge-discharge reactions. Therefore, in the embodiments of the present application, by providing the blank region 103 free of active material on the side of the second electrode plate 120 facing the first winding start end 111, at least a portion of the insulator 140 can be accommodated in the blank region 103, reducing the thickness of the portion of the second electrode plate 120 facing the first winding start end 111, thereby increasing the energy density of the battery cell.

In some embodiments of the present application, the first electrode plate 110 is a negative electrode plate and the second electrode plate 120 is a positive electrode plate. An insulator 140 is disposed between the winding start end of the negative electrode plate and the innermost turn of the positive electrode plate, so that even if the separator 130 shrinks and the winding start end of the negative electrode plate protrudes beyond the winding start end of the separator 130, the winding start end of the negative electrode plate will not contact the positive electrode plate, effectively alleviating short-circuiting between the positive and negative electrode plates.

An embodiment of the electrode assembly 100 of the present application is described in detail below.

In this embodiment, the electrode assembly 100 is not immersed in an electrolyte. The electrode assembly 100 includes a first electrode plate 110 and a second electrode plate 120 of opposite polarities, and a separator 130 disposed between the first electrode plate 110 and the second electrode plate 120, the first electrode plate 110 including a first winding start end 111, the separator 130 including a second winding start end 131, the first winding start end 111 and the second winding start end 131 being substantially aligned in the winding direction of the electrode plates. The electrode assembly 100 further includes an insulator 140 disposed between the innermost turn of the second electrode plate 120 and the first winding start end 111.

The separator 130 includes a first separator 132 and a second separator 133 located on two sides of the first electrode plate 110, the insulator 140 extending around the first winding start end 111, and the insulator 140 being connected to the first separator 132 and the second separator 133, respectively.

The innermost turn of the second electrode plate 120 includes a first corner segment 121 and a first straight segment 122 and a second straight segment 123 respectively connected to two ends of the first corner segment 121, the insulator 140 including a first section a, a second section b and a third section c sequentially connected in the winding direction, the first section a being disposed between the first straight segment 122 and the first separator 132, the second section b being disposed between the first corner segment 121 and the first winding start end 111, and the third section c being disposed between the second straight segment 123 and the second separator 133.

The insulator includes a first substrate layer 141b, a second adhesive layer 142 and a first adhesive layer 143, the second adhesive layer 142 being adhesively attached to the innermost turn of the second electrode plate 120, and the first substrate layer 141b being adhesively attached to the first separator 132 and the second separator 133 through the first adhesive layer 143. The insulator may further include a second substrate layer 141a, the second substrate layer 141a being adhesively attached to the innermost turn of the second electrode plate 120 through the second adhesive layer 142, and the first substrate layer 141b being adhesively attached to the first separator 132 and the second separator 133 through the first adhesive layer 143.

A side of the second electrode plate 120 facing the first winding start end 111 is provided with a blank region 103 free of active material, the blank region 103 being adapted to at least partially accommodate the insulator 140, the first electrode plate 110 being a negative electrode plate and the second electrode plate 120 being a positive electrode plate.

In an embodiment of the present application, a battery cell includes the electrode assembly 100 of the above embodiments. Since the battery cell according to the embodiment of the present application is provided with the above electrode assembly, the stability of the battery cell is significantly improved, and the probability of short-circuiting between the positive and negative electrode plates is effectively reduced.

An electrical device according to an embodiment of the present application is briefly described below.

The electrical device according to the embodiment of the present application includes the above battery cell. Since the electrical device according to the embodiment of the present application is provided with the above battery cell, the phenomenon of contact and short-circuiting between the positive and negative electrode plates caused by separator 130 shrinkage can be alleviated through the electrical device.

The electrical device may be, but is not limited to, a mobile phone, a tablet computer, a laptop computer, an electric toy, an electric tool, an electric bicycle, an electric motorcycle, an electric vehicle, a ship, a spacecraft, or the like. Among them, the electric toy may include a fixed or mobile electric toy, such as a game console, an electric car toy, an electric ship toy, an electric airplane toy, or the like and the spacecraft may include an airplane, a rocket, a space shuttle, a spaceship, or the like.

Although the present application has been described with reference to preferred embodiments, various improvements can be made thereto and components therein can be replaced with equivalents without departing from the scope of the present application. In particular, as long as there is no structural conflict, the technical features mentioned in the various embodiments can be combined in any manner. The present application is not limited to the specific embodiments disclosed herein, but includes all technical solutions falling within the scope of the claims.

## Claims

1. An electrode assembly, wherein the electrode assembly is of a wound structure and comprises a first electrode plate, a second electrode plate, and a separator, the separator is configured to dispose between the first electrode plate and the second electrode plate, the first electrode plate comprising a first winding start end, and the separator comprising a second winding start end, wherein, along a winding direction of the electrode assembly, a distance between the first winding start end and the second winding start end is not greater than 5 mm;
wherein the electrode assembly further comprises an insulator, the insulator being disposed between an innermost turn of the second electrode plate and the first winding start end to separate the first winding start end from the second electrode plate.

2. The electrode assembly according to claim 1, wherein the innermost turn of the second electrode plate comprises a first corner segment, the first corner segment being disposed opposite to the first winding start end, and at least a portion of the insulator is disposed between the first corner segment and the first winding start end.

3. The electrode assembly according to claim 2, wherein the separator comprises a first separator and a second separator located on two sides of the first electrode plate; and
the insulator extends around the first winding start end, and two ends of the insulator are connected to the first separator and the second separator, respectively.

4. The electrode assembly according to claim 3, wherein the innermost turn of the second electrode plate comprises a first straight segment and a second straight segment, the first corner segment connects the first straight segment and the second straight segment, the first straight segment, the first corner segment, and the second straight segment surround at least a portion of the first winding start end, and the insulator comprises a first section, a second section, and a third section sequentially disposed along the winding direction of the second electrode plate, the first section being disposed between the first straight segment and the first separator, the second section being disposed between the first corner segment and the first winding start end, and the third section being disposed between the second straight segment and the second separator.

5. The electrode assembly according to claim 3, wherein the insulator comprises a first insulator, the first insulator being connected to the first separator and the second separator.

6. The electrode assembly according to claim 5, wherein the first insulator comprises a first substrate layer and a first adhesive layer, the first substrate layer is configured to connect to the first separator and the second separator through the first adhesive layer.

7. The electrode assembly according to claim 6, wherein a thickness of the first substrate layer is 5 mm to 50 mm.

8. The electrode assembly according to claim 6, wherein an overlapping length of the first adhesive layer with the first separator or the second separator along the winding direction is 0.5 mm to 15 mm.

9. The electrode assembly according to claim 6, wherein an adhesive strength of the first adhesive layer is not less than 0.05 N/mm.

10. The electrode assembly according to claim 6, wherein a thickness of the first adhesive layeris 2 µm to 20 µm.

11. The electrode assembly according to claim 6, wherein the first substrate layer is configured as a PP material layer, a PI material layer, or a PET material layer.

12. The electrode assembly according to claim 6, wherein the insulator further comprises a second insulator, the second insulator is configured to connect to an inner surface of the innermost turn of the second electrode plate.

13. The electrode assembly according to claim 12, wherein the second insulator comprises a second adhesive layer, the second adhesive layer being connected to the inner surface of the innermost turn of the second electrode plate.

14. The electrode assembly according to claim 13, wherein a thickness of the second adhesive layer is 2 µm to 20 µm.

15. The electrode assembly according to claim 13, wherein an adhesive strength of the second adhesive layer in an electrolyte is 0.02 N/mm to 0.4 N/mm.

16. The electrode assembly according to claim 13, wherein, after the electrode assembly is immersed in an electrolyte, the second adhesive layer is separated from the first substrate layer or the second adhesive layer is dissolved in the electrolyte.

17. The electrode assembly according to claim 13, wherein, after the electrode assembly is immersed in an electrolyte, the second adhesive layer is separated from the first substrate layer, the first substrate layer comprising a first side surface connected to the second adhesive layer and a second side surface connected to the first adhesive layer, and a roughness of the first side surface being less than a roughness of the second side surface.

18. The electrode assembly according to claim 13, wherein the second insulator further comprises a second substrate layer, the second substrate layer is configured to connect to the inner surface of the innermost turn of the second electrode plate through the second adhesive layer.

19. The electrode assembly according to claim 18, wherein an elongation rate of the second substrate layer is greater than an elongation rate of the second electrode plate.

20. The electrode assembly according to claim 19, wherein the second substrate layer has an elongation rate of A and the first substrate layer has an elongation rate of B, wherein A is greater than B.

21. The electrode assembly according to claim 12, wherein a third adhesive layer is further configured to dispose between the first insulator and the second insulator, and after the electrode assembly is immersed in an electrolyte, the third adhesive layer is configured to dissolve in the electrolyte to separate the first insulator from the second insulator.

22. The electrode assembly according to claim 21, wherein the third adhesive layer is an acrylic adhesive layer or a rubber layer.

23. The electrode assembly according to claim 1, wherein a side of the second electrode plate facing the first winding start end is provided with a blank region free of active material, the blank region being adapted to at least partially accommodate the insulator.

24. The electrode assembly according to claim 1, wherein the first electrode plate is a negative electrode plate and the second electrode plate is a positive electrode plate.

25. A battery cell comprising the electrode assembly according to any one of claims 1 to 24.

26. An electrical device comprising the battery cell according to claim 25.
